# EUROPÄISCHE PATENTSCHRIFT

(11) **EP 2 199 497 B1**
(45) Veröffentlichungstag und Bekanntmachung des Hinweises auf die Patenterteilung: **16.08.2017**
(21) Anmeldenummer: 09175780.7
(22) Anmeldetag: 12.11.2009
(51) Int. Cl.: E04H 12/08, E04H 12/34

(54) **Turm einer Windenergieanlage**
Wind turbine tower
Tour d'une éolienne

(30) Priorität: 19.12.2008 DE 102008063846; 17.03.2009 DE 102009013186
(43) Veröffentlichungstag der Anmeldung: 23.06.2010
(73) Patentinhaber: Senvion GmbH, 22297 Hamburg (DE)
(72) Erfinder: Meesenburg, Uwe, 25840 Friedrichstadt (DE)
(74) Vertreter: Seemann & Partner Patentanwälte mbB

(56) Entgegenhaltungen:
- EP-A1- 1 775 419
- WO-A1-03/036084
- WO-A1-2007/095940
- DE-A1- 3 926 488
- DE-A1- 19 609 006
- DE-A1- 19 741 988
- US-A- 3 618 702
- US-A1- 2006 225 379

## Beschreibung

Die Erfindung betrifft ein Verfahren zum Errichten eines Turms einer Windenergieanlage aus wenigstens drei rohrförmigen Turmsegmenten. Außerdem betrifft die Erfindung einen Turm einer Windenergieanlage, wobei der Turm aus mehreren Turmsegmenten errichtet wird oder ist, sowie eine Verwendung von Steigleitern bei der oder zur Errichtung eines Turms einer Windenergieanlage und eine Verwendung von Stromschienen in einem Turm einer Windenergieanlage.

Windenergieanlagen der Patentanmelderin sind unter der Bezeichnung 5M, MM92, MM82, MM70 sowie MD77 bekannt.

Moderne Windenergieanlagen weisen im Allgemeinen einen Turm auf, auf dem ein Maschinengehäuse oder eine Gondel mit einem Rotor aufgesetzt ist. Der Turm ist insbesondere als Stahlrohrturm ausgebildet und weist im Allgemeinen eine sich verjüngende Form auf.

Der Turm selbst besteht weiterhin aus in der Regel Stahlturmabschnitten, die optional aus vorgefertigten Mantelsegmenten zusammengesetzt werden.

In WO-A-2004/083633 sind ein Stahlturm einer Windkraftanlage sowie ein Verfahren zum Bauen eines großformatigen, zylindrischen oder konischen Turms einer Windkraftanlage beschrieben.

Weiterhin ist in WO-A-03/036084 eine Windenergieanlage offenbart, die einen aus mehreren Turmsegmenten aufgebauten Turm, einen im Bereich des Turmkopfes angeordneten Generator, ein im Bereich des Turmfußes angeordnetes Leistungsmodul und in den Turmsegmenten vormontierte Stromschienen zur Stromübertragung vom Generator zum Leistungsmodul aufweist.

Das elektrische Leistungsmodul der Windenergieanlage, das elektrische Einheiten wie Transformator, Schaltschränke, ggf. Wechselrichter, Mittelspannungsanlage, Niederspannungsverteilung usw. umfasst, ist bei vielen bekannten Windenergieanlagen unterhalb der Generatorebene und häufig im Bereich des Turmfußes des Turmes der Windenergieanlage oder auch innerhalb des Maschinengehäuses am Turmkopf angeordnet. Um die elektrische Energie, die von dem im Bereich der Turmspitze innerhalb einer Gondel angeordneten Generator erzeugt wird, zum Leistungsmodul bzw. zum Netzanschluss zu übertragen, sind dabei Stromschienen vorgesehen, die zumeist innerhalb des Turmes verlaufen.

Ferner ist in beispielsweise in EP-A-1 775 419 eine Steigleiter einer Windenergieanlage offenbart, wobei die Steigleiter im Inneren des Turms entlang der Turmwandung von unten nach oben ausgerichtet angeordnet ist.

Die Leiter ist mehrteilig ausgebildet und jede Einzelleiter ist für sich gelagert. Die Einzelleiter ist als Hängeleiter oben an einer Aufhängung aufgehängt und unterhalb der Aufhängung, insbesondere nahe ihres unteren Endes, über eine Horizontalabstützung gegen Horizontalkräfte abgestützt.

Aus US 2006/0225379 A1 ist ferner ein modulares Konstruktionskit für Türme von Windenergieanlagen bekannt, das bis zu fünf teils konische und teils zylindrische Turmsegmente unterschiedlicher Länge umfasst, die in unterschiedlichen Kombinationen zusammengesetzt werden können, um Türme unterschiedlicher gewünschter Höhen zwischen 60 und 100 Metern zu errichten.

DE 196 09 006 A1 offenbart ein System aus zwei miteinander zu verbindenden Stromschienen, bei dem thermische Längeneffekte ausgeglichen werden. Dazu sind die Schienenenden zweier benachbarter Stromschienen durch zumindest einen längenveränderlichen Stromleiter miteinander stromführend verbunden, wobei die Schienenenden aus der Mittelachse ihrer Stromschiene herausgebogen und zu dieser in einem Versetzungsmaß so parallel geführt sind, dass das Bandprofil des einen Schienenendes mit dem außerhalb des Schienenendes der anderen Stromschiene verlaufenden Bandprofil letzterer etwa fluchtet, wobei die Schienenenden axial bewegbar miteinander verbunden sind. Der flexible bzw. bandartige Stromleiter ist jeweils durch ein gleitbares Querorgan an das Schienenende angeschlossen.

Ferner offenbart WO 2007/095940 A1 einen Turm einer Windenergieanlage, dessen Turmsegmente durch jeweils wenigstens zwei an einer vertikalen Stoßkante aneinander anstoßende metallische Turmplatten gebildet werden. Die Turmplatten werden an der gemeinsamen Stoßkante mittels einer Laschenverbindung miteinander verbunden, wobei eine die Stoßkante überdeckende Flachlasche der Laschenverbindung auf der Turminnenseite angeordnet ist.

Ein weiteres Verfahren zur Errichtung des Turms einer Windenergieanlage ist aus DE 197 41 988 A1 bekannt.

Ausgehend von diesem Stand der Technik besteht die Aufgabe der Erfindung darin, die Errichtung eines Turms einer Windenergieanlage aus mehreren Turmsegmenten zu vereinfachen, wobei insbesondere die Handhabung von Turmsegmenten und somit die Errichtung von Windenergietürmen vereinfacht werden soll.

Die Aufgabe wird gelöst durch ein Verfahren zum Errichten eines Turms einer Windenergieanlage aus wenigstens drei rohrförmigen Turmsegmenten, wobei ein Turmsegment an seinen Enden mit jeweils einem anderen Turmsegment verbunden wird,
- wobei die Turmsegmente in einer vorbestimmten Reihenfolge der Art Turmsegment A - Turmsegment B - Turmsegment C übereinander angeordnet werden,
- wobei das erste Turmsegment A aus einer bereitgestellten Vielzahl i ≥ 2 von untereinander baugleichen ersten und gegeneinander austauschbaren Turmsegmenten Aᵢ beliebig ausgewählt wird,
- wobei das zweite Turmsegment B aus einer bereitgestellten Vielzahl m ≥ 2 von untereinander baugleichen zweiten und gegeneinander austauschbaren Turmsegmenten Bₘ beliebig ausgewählt wird,
- wobei das dritte Turmsegment C aus einer bereitgestellten Vielzahl n ≥ 2 von untereinander baugleichen dritten und gegeneinander austauschbaren Turmsegmenten Cₙ beliebig ausgewählt wird,
wobei die Turmsegmente Aᵢ, Bₘ, Cₙ im Inneren vormontierte, als lineare Bauteile ausgeführte Baugruppen aufweisen, die unter Verwendung von Baugruppenlängenadaptern miteinander verbunden werden, wobei die Turmsegmente Aᵢ, Bₘ, Cₙ vormontierte Stromleitungsmittel im Inneren aufweisen, wobei die Stromleitungsmittel der Turmsegmente unter Verwendung von Stromleitungslängenausgleichsmitteln bei Errichtung des Turms miteinander verbunden werden.

Die Aufgabe wird ferner gelöst durch eine Verwendung gemäß einem der Ansprüche 11 oder 12, sowie durch einen Turm nach Anspruch 13. Durch die Bereitstellung von beliebig zahlreichen, mit einander kombinierbaren Turmsegmenten verschiedener Bauarten, wird auf einfache und schnelle Weise ein Turm errichtet, wobei die zu verbindenden Turmsegmente frei und ohne Beschränkung ausgewählt werden sowie die darin angeordneten Baugruppen wie z.B. Steigleitern oder Stromleitungsmittel, die vorzugsweise entlang der Turmwandung verlaufen, unter Verwendung von entsprechenden Baugruppen(längen-)adaptern, wie z.B. einbringbare Steigleiterzwischenstücke, miteinander verbunden sind, wodurch insbesondere Längenunterschiede oder Abstandsunterschiede wie z.B. bei Steigleitern ausgeglichen werden, so dass die diversen Turmsegmente Aᵢ, Bₘ, Cₙ , .... der Bauarten A, B, C, ... beliebig miteinander kombiniert werden können und miteinander verbindbar sind.

Im Gegensatz dazu werden gemäß dem Stand der Technik die Turmsegmente passend und individuell aufeinander angepasst, so dass ausschließlich ganz genau ein bestimmtes Turmsegment mit einem genau bestimmten Turmsegment verbindbar bzw. verbunden ist, wodurch jeder Turm von Windenergieanlagen aufgrund der individuell aufeinander abgestimmten Turmsegmente eine unverwechselbare Art Individuum mit exakten und charakteristischen Turmsegmenteigenschaften ist.

Gemäß der Erfindung werden nicht-individualisierte Turmsegmente von verschiedenen Bauarten oder Bautypen bereitgestellt, ohne dass ein Turmsegment auf ein anderes Turmsegment individuell abgestimmt oder angepasst ist. Durch die Verwendung von nicht-individualisierten Turmsegmenten von mehreren Bauarten (Bauarttyp A, B, C, ...) wird die Handhabung von Turmsegmenten und somit die Errichtung von Windenergietürmen vereinfacht. Die erfindungsgemäßen Turmsegmente einer Bauart sind jeweils untereinander nicht unterscheidbar oder nicht individualisiert und nicht genau auf ein spezifiziertes bestimmtes, individuelles Turmsegment einer anderen Bauart abgestimmt oder angepasst.

Die nicht-individualisierten Turmsegmente verschiedener Bauarten sind jeweils innerhalb der entsprechenden Bauartklasse nicht unterschiedlich, während untereinander zwischen den Bauartklassen oder -typen (Bauarttyp A, B, C, ...) Unterschiede bestehen, um einen Turm aus nicht-individuell spezifizierten Turmsegmenten beispielsweise der Anordnung Turmsegment A - Turmsegment B - Turmsegment C zu errichten. Somit werden innerhalb der Bauarttypen mehrere einheitliche und nicht-individualisierte sowie austauschbare Turmsegmente des Bauarttyps bereitgestellt.

Baugleich bedeutet aufgrund der nicht unerheblichen Längentoleranzen im Turmbau von Windenergieanlagen nicht identisch, sondern nach gleicher Fertigungszeichnung mit nicht individualisierten Baugruppen gefertigt. Die trotz baugleicher Turmsegmente auftretenden Längentoleranzen, z.B. von mehreren Zentimetern, werden durch die erfindungsgemäße Ausgestaltung ohne eine Individualisierung der Turmsegmente mit sehr geringem Aufwand ausgeglichen.

Weiterhin können die nicht-individuell gefertigten bzw. angepassten Turmsegmente der diversen Turmsegment-Bauarten auch nicht-individualisierte Baugruppen wie z.B. Steigleitern aufweisen, wobei die Baugruppen der Turmsegmente verschiedener Bauarttypen miteinander verbunden werden. Die individuelle Anpassung der Verbindungslänge zwischen den Baugruppen erfolgt durch entsprechende Adaptereinrichtungen, z.B. Steigleiterzwischenstücke, um dadurch die individuellen Abstände der Verbindung zwischen den nicht individuell aufeinander angepassten Baugruppen von verschiedenen nicht-individuell aufeinander angepassten Turmsegmenten von verschiedenen Bauarttypen auf einfache Weise auszugleichen.

Erfindungsgemäß weisen gemäß einer bevorzugten Ausgestaltung die Turmsegmente Aᵢ, Bₘ, Cₙ des Turms im Inneren vormontierte, nicht individualisierte, als lineare Bauteile ausgeführte Baugruppen auf, die unter Verwendung von Baugruppenlängenadaptern miteinander verbunden sind. Hierbei sind die linearen Baugruppen vorteilhafterweise in ihrer Länge kleiner bzw. kürzer als die Länge der jeweiligen Turmsegmente Aᵢ, Bₘ, Cₙ des Turms bzw. als die Turmsegmente Aᵢ, Bₘ, Cₙ des Turms.

Baugruppenlängenadapter bezeichnen Verbindungsstücke, z.B. Schienenverbindungsstücke oder Steigleiterverbindungszwischenstücke, die die individuellen Abstände zwischen nicht individualisierten Baugruppen auf einfache Weise, insbesondere im Verbindungsbereich von zwei Turmsegmenten, ausgleichen. Insbesondere wird ein Längenausgleich von bis zu 200 mm, bevorzugt insbesondere von 100 mm durch die erfindungsgemäßen Baugruppenlängenadapter ermöglicht.

Erfindungsgemäß weisen die Turmsegmente Aᵢ, Bₘ, Cₙ vormontierte Steigleitern, vorzugsweise im Inneren, auf, wobei die Steigleitern der Turmsegmente unter Verwendung von Steigleiterlängenausgleichsmitteln, wie beispielsweise eines nachfolgend beschriebenen Leiterzwischenstücks, bei Errichtung des Turms miteinander verbunden werden. Insbesondere wird der Turm mit einem oder mehreren Steigleiterzwischenstücken im Bereich der Verbindungen der Turmsegmente ausgebildet.

Weiterhin ist es gemäß einer Ausgestaltung vorteilhaft, dass die Turmsegmente Aᵢ, Bₘ, Cₙ vormontierte Stromleitungsmittel, vorzugsweise im Inneren, aufweisen, wobei die Stromleitungsmittel der Turmsegmente unter Verwendung von Stromleitungslängenausgleichsmitteln, wie beispielsweise eines nachstehend beschriebenen (Stromschienen-)Schienenverbindungsstücks oder dergleichen, bei Errichtung des Turms miteinander verbunden werden. Bei der Ausgestaltung des Turms werden die Stromleitungsmittel in Form von Stromschienen miteinander im Bereich der Verbindungen der Turmsegmente verbunden.

Der Turm einer Windenergieanlage ist oder wird in einer Ausgestaltung aus mehreren Turmsegmenten errichtet, wobei zwei Turmsegmente in einem gemeinsamen Verbindungsbereich miteinander verbunden werden oder sind, wobei ein erstes Turmsegment und ein zweites Turmsegment im Inneren jeweils eine Steigleiter, die jeweils wenigstens einen Leiterholm und mehrere Trittstufen aufweist, aufweisen, wobei bei Verbindung des ersten Turmsegments mit dem zweiten Turmsegment der oder die Leiterholme im ersten Turmsegment im Verbindungsbereich von dem oder den Leiterholmen im zweiten Turmsegment beabstandet sind, wobei, vorzugsweise bei Errichtung des Turms oder bei oder während der Montage der Turmsegmente, im Verbindungsbereich der Turmsegmente unter Verwendung eines den Verbindungsbereich überbrückenden Steigleiterzwischenstücks der oder die Leiterholme des ersten Turmsegments mit dem oder den Leiterholmen des zweiten Turmsegments miteinander verbunden werden oder sind.

Die Erfindung beruht auf dem weiteren Gedanken, dass Turmsegmente mit im Inneren des Turmsegments vormontierten Steigleitern bereitgestellt werden, wobei die Steigleiterenden nicht über die Enden des Turmsegments hinausragen, sondern vielmehr in Bezug auf die Enden des Turmsegments nach innen zurückversetzt sind.

Das heißt, dass die Länge einer Steigleiter eines Turmsegments kleiner als die Außenlänge eines Turmsegments und/oder kleiner als die Höhe bzw. Länge eines Turmsegments ist. Hierbei ist die Steigleiter vor der Errichtung des Turms im Turmsegment entsprechend vormontiert, wobei die Steigleiter selbst aus mehreren Einzelleitern ausgebildet sein kann, die sich zwischen den Enden bzw. den Endflanschen eines Turmsegments erstrecken. Insbesondere ist die Steigleiter eines Turmsegments mit entsprechenden Befestigungsmitteln bzw. Halterungen an der Innenwandung des Turms bzw. des Turmsegments im Wesentlichen parallel zur Längsachse des Turmsegments bzw. entlang der Turmwandung im Inneren des Turmsegments befestigt.

Bevorzugterweise wird der Turm aus einer Mehrzahl von Turmsegmenten von übereinander angeordneten und zueinander ausgerichteten Einzelturmsegmenten errichtet, wobei die Turmsegmente bevorzugterweise über Flanschverbindungen miteinander verbunden werden oder sind. Insbesondere bestehen die Turmsegmente aus Rohrsegmenten aus Stahl.

Dadurch, dass ein vorgefertigtes Turmsegment mit einer Steigleiter, die nicht über die Enden des Turmsegments hinausragt, bereitgestellt wird, wird einerseits der Transport des Turmsegments von dem Herstellungsort zum Errichtungsort einer Windenergieanlage vereinfacht, da die Steigleiter im Inneren des Turmsegments sicher gegen mechanische Belastungen während des Transports geschützt ist. Außerdem wird die Montage eines Turms bzw. der Turmsegmente am Errichtungsort vereinfacht, da die entsprechenden zueinander passenden komplementären Turmsegmente variabel verwendet werden können.

Beispielsweise werden gemäß dem Stand der Technik vor der Errichtung eines Turm die entsprechenden individualisierten Turmsegmente mit Steigleitern ausgestattet, so dass die entsprechenden Stoßstellen der Steigleitern und die Flanschverbindungen der Turmsegmente genau vorgegeben sind. Dieselben Turmsegmente müssen anschließend zeitnah und nahezu gleichzeitig am Errichtungsort der Windenergieanlage vorhanden sein, um zügig den Turm zu errichten. Wird beispielsweise eine Steigleiter eines individualisierten Turmsegments während des Transports beschädigt, so muss die Steigleiter sehr aufwändig repariert werden, wodurch sich die Errichtung einer Windenergieanlage verzögert.

Demgegenüber ist es gemäß der Erfindung möglich, baugleiche und nicht-individualisierte Turmsegmente des gleichen Typs, deren Abmaßungen einander entsprechen, variabel zu handhaben, d.h. dass beispielsweise irgendein Turmsegment dieser Bauart bzw. dieser Größe aus einer Anzahl von mehreren Turmsegmenten dieser Art verwendet werden kann, ohne dass es darauf ankommt, dass die Turmsegmente nach der Anfertigung am Herstellungsort für die Innenausstattung zusammengebaut werden. Somit ist es möglich, irgendein Turmsegment einer bestimmten Größe mit irgendeinem beliebigen Turmsegment einer anderen Art bei der Errichtung einer Windenergieanlage zu verwenden. Hierdurch wird die Handhabung der Turmsegmente bei der Errichtung einer Windenergieanlage verbessert.

Erfindungsgemäß ist die Länge der Steigleiter kleiner als die Höhe des Turmsegments oder die Länge des Turmsegments, so dass die Enden der Steigleiter mit vorbestimmten Abständen jeweils zu den Enden des Turmsegments beabstandet sind, wodurch die einander zugewandten Enden der Steigleitern von zwei angrenzenden und miteinander verbundenen Turmsegmenten voneinander im Verbindungsbereich bzw. Flanschbereich beabstandet sind. Bei der Errichtung des Turms sowie bei Anordnung eines zweiten Turmsegments auf einem ersten Turmsegment, wodurch ein vertikal ausgebildeter Turm einer Windenergieanlage entsteht, sind die Enden der einander zugewandten Steigleitern der Turmsegmente in einem vorbestimmten Abstand zueinander beabstandet.

Insbesondere ist die Höhe des starren Steigleiterzwischenstücks größer als der Abstand zwischen den Enden der Steigleitern in den Turmsegmenten, so dass auf einfache Weise der Abstand zwischen den Enden der Steigleitern im Verbindungsbereich der Turmsegmente überbrückt wird und die Steigleitern verbunden sind. Vorzugsweise wird das Steigleiterzwischenstück bei der Errichtung des Turms bzw. bei der oder während der Montage der miteinander zu verbindenden Turmsegmente zwischen die Steigleitern der Turmsegmente eingesetzt.

Eine andere Möglichkeit, ein Steigleiterzwischenstück zwischen den Steigleitern einzubauen, besteht darin, das Steigleiterzwischenstück zunächst mit den oberen Einschubhülsen bzw. Holmenden des Zwischenstücks in die unteren Enden der oberen Steigleiter des oberen Turmsegments einzubringen oder einzukanten und das Zwischenstück gegen das untere Ende der oberen Steigleiter zu drücken bzw. zu halten. Anschließend wird das untere freie Ende des Steigleiterzwischenstücks mit seinen unteren Einschubhülsen bzw. Holmenden über die Holmenden der unteren Steigleiter verschwenkt, bis die Einschubhülsen über den hohlen Enden der Holme der unteren Steigleiter des unteren Turmsegments positioniert bzw. ausgerichtet sind. Danach wird das Steigleiterzwischenstück, vorzugsweise vertikal, abgesenkt, bis das Steigleiterzwischenstück auf den Enden der unteren Steigleiter aufsetzt, wobei nach Absetzen des Steigleiterzwischenstücks die oberen Einschubhülsen weiterhin in die Holmenden der oberen Steigleiter eingreifen.

In diesem Fall sind vorzugsweise die unteren Einschubhülsen kürzer als die oberen Einschubhülsen. Vorteilhafterweise erfolgt ein gleichmäßiger Längenausgleich am unteren und am oberen Ende des Steigleiterzwischenstücks, so dass der Abstand der unteren Trittstufe des Steigleiterzwischenstücks zur oberen Trittstufe der Steigleiter des unteren Turmsegments im Wesentlichen oder annähernd gleich ist mit dem Abstand der oberen Trittstufe des Steigleiterzwischenstücks zur unteren Trittstufe der Steigleiter des oberen Turmsegments.

Außerdem ist es im Rahmen der Erfindung denkbar, das Steigleiterzwischenstück mittels von außen angelegten Manschetten oder anderen Klemmvorrichten mit den Steigleitern bzw. den Endholmen zu verbinden. Hierbei kann das Steigleiterzwischenstück auch ohne Einschubhülsen sein, so dass das Steigleiterzwischenstück gleich oder kleiner ist als der Abstand zwischen den zu verbindenden Enden der Steigleitern.

Typischerweise wird mittels des Steigleiterzwischenstücks, das an den beiden Enden jeweils mit Einschubhülsen ausgebildet ist, beispielweise eine maximale Verbindungausgleichstoleranzlänge maximal von ± 40 mm vorgesehen. Hierbei können die Einschubhülsen an den beiden Enden des Steigleiterzwischenstücks eine Verbindungausgleichstoleranzlänge von 20 mm ausgleichen, wobei die Länge durch, vorzugsweise konstruktionsbedingte, Festigkeitsanforderungen entsprechend limitiert ist oder wird.

Dabei ist oder wird zwischen dem an die Verbindungsstelle bzw. dem Verbindungsbereich der Turmsegmente angrenzenden Ende einer Steigleiter des ersten Turmsegments und dem an die Verbindungsstelle bzw. den Verbindungsbereich angrenzenden Ende der Steigleiter des anderen bzw. zweiten Turmsegments ein Steigleiterzwischenstück einer vorbestimmten Länge eingesetzt, wodurch die Steigleitern der Turmsegmente miteinander verbunden werden. Dadurch, dass das Steigleiterzwischenstück mit ausgleichenden Einschubenden bereitgestellt wird, werden bei der Errichtung Fertigungstoleranzen bei der (Vor-)Montage der Steigleitern bzw. bei der Herstellung der Turmsegmente auf einfache Weise während der Errichtung der Windenergieanlage ausgeglichen.

Mittels des Steigleiterzwischenstücks werden insbesondere die Stoßstellen der Turmsegmente im Verbindungsbereich, d.h. die Flanschverbindung der Turmsegmente auf einfache Weise überbrückt, wobei mittels des Steigleiterzwischenstücks die (Längen-) Fertigungstoleranzen der vormontierten Steigleitern sowie der Turmsegmente ausgeglichen werden. Insbesondere werden dabei Turmsegmente eingesetzt, die Steigleitern mit Leiterholmen und Trittstufen aufweisen, wobei die Enden der Steigleitern nicht aus dem Turmsegment nach der Vormontage hinausragen.

Die Gesamtlänge einer Steigleiter in einem Turmsegment ist dabei kleiner als die Länge und/oder die Höhe eines Turmsegments. Bevorzugterweise sind die Turmsegmente jeweils an ihren Enden mit Flanschen oder Flanschringen versehen, wodurch auf einfache Weise eine stabile und dauerhafte Verbindung über eine ausgebildete Flanschverbindung im Verbindungsbereich der Turmsegmente hergestellt wird, so dass nach Anordnung eines Segments auf einem bereits errichteten Turmsegment Schraubbolzen in die Bohrungen der Flansche oder Flanschringe eingesetzt werden und miteinander verspannt werden. Hierbei bildet die Flanschverbindung den Verbindungsbereich zwischen den Turmsegmenten. Bevorzugterweise sind die Steigleitern aus einem leichten Material, wie z.B. Aluminium oder dergleichen hergestellt.

Somit wird erfindungsgemäß ein einfacher Längentoleranzausgleich von vormontierten Teilen durch das erfindungsgemäße Steigleiterzwischenstück, das zwischen den Enden der zueinander zu verbindenden Steigleitern der Turmsegmente eingesetzt wird, ermöglicht.

Überdies zeichnet sich eine Weiterbildung des Turms dadurch aus, dass das Steigleiterverbindungszwischenstück ohne Befestigung, d.h. ohne Kontakt zu der Flanschverbindung der Turmsegmente bzw. ohne Befestigung zu den Turmsegmenten oder dem Verbindungsbereich der Turmsegmente zwischen den Steigleitern der Turmsegmente angeordnet wird oder ist. Dabei hat das Steigleiterzwischenstück lediglich (Verbindungs-)Kontakt mit den Enden der Steigleitern der beiden miteinander verbundenen Turmsegmente.

Ferner sind oder werden gemäß einer vorteilhaften Ausgestaltung auf das Steigleiterzwischenstück wirkende Belastungskräfte, z.B. durch eine Wartungsperson auf dem Steigleiterzwischenstück auf die untere Steigleiter und/oder auf die obere Steigleiter abgeleitet, so dass in dem vom Steigleiterzwischenstück überbrückten Verbindungsbereich der Turmsegmente die wirkenden Kräfte auf die obere und/oder untere Steigleiter verteilt aufgefangen werden.

Überdies sind oder werden mittels des Steigleiterzwischenstücks, insbesondere im angeordneten Zustand zwischen den Steigleitern, Längentoleranzen in vertikaler Richtung bei montierten, d.h. miteinander verbundenen, Turmsegmenten von bis zu 200 mm, insbesondere von bis zu 100 mm, weiter vorzugsweise von bis zu 40 mm, und/oder Seitentoleranzen von bis zu 200 mm, insbesondere von bis zu 100 mm, weiter vorzugsweise von bis zu 50 mm, ausgeglichen.

Bevorzugterweise weisen die Steigleiter wenigstens einen, vorzugsweise zwei, Leiterholme auf, wobei die Leiterholme aus Hohlprofilen bestehen. Darüber hinaus weisen die Steigleitern auch entsprechende zu den Leiterholmen quer, insbesondere senkrecht, ausgebildete Trittstufen auf.

Außerdem ist in einer Weiterbildung vorgesehen, dass das erste Turmsegment und/oder das zweite Turmsegment an ihren Enden mit Flanschen bzw. Flanschringen versehen sind, wobei die Flansche sich kreisringförmig und bevorzugterweise außen bündig mit den Einzelturmsegmenten erstrecken.

Bevorzugterweise verfügt das Steigleiterzwischenstück über wenigstens einen Querbalken als Trittstufe, wobei das Steigleiterzwischenstück über entsprechende Verbindungsholme zwischen den Enden der miteinander zu verbindenden Steigleitern der Turmsegmente verfügt.

Darüber hinaus ist in einer weiteren Ausgestaltung des Turmes vorgesehen, dass das Steigleiterzwischenstück den oder die Leiterholme der Steigleitern des ersten und des zweiten Turmsegments verbindet, wobei das Steigleiterzwischenstück auf einer Seite, vorzugsweise auf beiden Seiten, Holmverbindungsstücke aufweist, die in die hohlen Holme bzw. Holmenden der Steigleitern der Turmsegmente eingebracht werden oder sind.

Vorzugsweise erfolgt ein Längentoleranzausgleich bei zwischen den Steigleitern angeordnetem Steigleiterzwischenstück zwischen der unteren Trittstufe des Steigleiterzwischenstücks und oberen Trittstufe der unteren Steigleiter und/oder zwischen der oberen Trittstufe des Steigleiterzwischenstücks und unteren Trittstufe der oberen Steigleiter. Insbesondere kann in einer Ausgestaltung ein, vorzugsweise gleichmäßiger, Längentoleranzausgleich gleichzeitig im unteren Bereich und im oberen Bereich des Steigleiterzwischenstücks stattfinden, so dass die ausgeglichenen Toleranzen verteilt sind. Hierzu können Ausgleichsdistanzhalter oder dergleichen eingesetzt bzw. verwendet werden.

Um eine vertikale Fixierung des Steigleiterzwischenstücks zwischen den Steigleitern auszubilden bzw. zu erreichen, wird das zwischen die Steigleitern der Turmsegmente eingesetzte Steigleiterzwischenstück gemäß einer Ausgestaltung mit den Leiterholmen der Steigleitern fest verbunden. Dies kann durch Verschrauben der Enden der Steigleitern mit den Zwischenstückenden erfolgen. Ferner können die Teile durch Einbringen von Splinten oder dergleichen in gebohrte oder vorgesehene Löcher verbunden werden.

Weiterhin ist im Rahmen der Erfindung vorgesehen, dass der Abstand zwischen dem Ende eines Turmsegments, das bei Errichtung eines Turms unten angeordnet ist, und dem Ende der Steigleiter an diesem Ende des Turmsegments, stets konstant ist. Dadurch wird auf einfache Weise die Fertigung bzw. die Vormontage von Steigleitern in den Turmsegmenten erleichtert. Weiterhin können auch die Enden der Steigleitern am oberen Ende der Turmsegmente in einem vorbestimmten Abstand zu dem Ende des oberen Turmsegments entsprechend ausgebildet bzw. angeordnet sein.

Außerdem sind die Turmsegmente bzw. die Turmwände der errichteten Türme zylindrisch oder kreisförmig ausgebildet. Darüber hinaus sind die Turmsegmente, insbesondere vom unteren zum oberen Ende des Turmsegments, konisch verjüngt ausgebildet.

Überdies ist in einer Ausgestaltung des Turms vorgesehen, dass die Steigleiter des ersten Turmsegments und/oder die Steigleiter des zweiten Turmsegments eine Steigschutzschiene aufweisen, die im Wesentlichen dieselbe Länge der entsprechenden Leiterholme der Steigleitern aufweist. Insbesondere dient die Steigschutzschiene, die im Wesentlichen parallel zu den Leiterholmen der Steigleitern verläuft, zur Absicherung von Personen, die eine Windenergieanlage besteigen. Darüber hinaus ist oder wird vorteilhafterweise zwischen den Enden der zu verbindenden Steigschutzschienen des ersten und/oder des zweiten Turmsegments bzw. der entsprechenden Steigleitern eine Steigschutzschiene des Steigleiterzwischenstücks eingepasst, um die Steigschutzschienen der Steigleitern entsprechend miteinander zu verbinden. Die Anpassung der Länge der Steigschutzschiene des Steigleiterzwischenstücks kann dabei auf manuelle Weise entsprechend angepasst werden.

Darüber hinaus ist in einer Weiterbildung vorgesehen, dass die Länge der, vorzugsweise vormontierten, Steigleitern des ersten und/oder des zweiten Turmsegments kleiner als die Länge bzw. die Höhe des ersten bzw. zweiten Turmsegments ist, so dass die Enden der Steigleiter jeweils mit einem vorbestimmten Abstand zu den Enden des Turmsegments innerhalb der Turmsegmente angeordnet sind bzw. enden.

Außerdem ist oder wird gemäß einem weiteren Aspekt der Erfindung der Turm aus mehreren Turmsegmenten errichtet, wobei zwei Turmsegmente in einem gemeinsamen Verbindungsbereich miteinander verbunden werden oder sind, wobei ein erstes Turmsegment und ein zweites Turmsegment im Inneren jeweils eine starre Stromschiene aufweisen, wobei bei Verbindung des ersten Turmsegments mit dem zweiten Turmsegment im Verbindungsbereich die Stromschiene im ersten Turmsegment von der Stromschiene im zweiten Turmsegment beabstandet ist, der dadurch weitergebildet wird, dass unter Verwendung eines, den Verbindungsbereich der Turmsegmente überbrückenden und in seiner Länge variabel anpassbaren, insbesondere variabel in der Länge einstellbaren, Schienenverbindungsstücks die Stromschiene des ersten Turmsegments mit der Stromschiene des zweiten Turmsegments miteinander verbunden werden oder sind.

Die Erfindung beruht hierbei auf dem weiteren Gedanken, dass die im Inneren der Turmsegmente vormontierten Stromschienen in ihrer Länge kürzer sind als die Höhe bzw. die Länge eines Turmsegmentes, so dass die Enden der Stromschiene nicht aus dem Turmsegment herausragen und somit innerhalb der Turmsegmente im Inneren befestigt bzw. angeordnet sind. Dadurch ist es möglich, Turmsegmente bei deren Herstellung mit Stromschienen im Inneren auszustatten, um anschließend nach der (Vor-)Montage die Turmsegmente zu den Errichtungsorten von Windenergieanlagen zu transportieren, ohne dass die Stromschienen während des Transports beschädigt werden können.

Die Stromschienen selbst sind dabei im Inneren der Turmsegmente mittels entsprechender Befestigungseinrichtungen angebracht. Über die Stromschienen wird die elektrische Energie, die von einem Generator in der Gondel auf dem Turm der Windenergieanlage erzeugt wird, zu einem Leistungsmodul oder dem Netzanschluss außerhalb der Windenergieanlage übertragen.

Dadurch, dass die Stromschienen in einem vorbestimmten Abstand zu Enden der Turmsegmente enden, ergibt sich nach Verbindung der Turmsegmente mit den Stromschienen bzw. deren Stromschienensegmente ein Abstand zwischen den Stromschienen der beiden verbundenen Turmsegmente, wobei unter Verwendung eines schienenartigen, in seiner Länge einstellbaren Schienenverbindungsstücks zwischen den beiden Stromschienen eine, vorzugsweise im Wesentlichen geradlinige, Verbindung im Verbindungsbereich der Turmsegmente hergestellt wird. Dabei ist das erfindungsgemäße lineare Schienenverbindungsstück in seiner Länge variabel anpassbar bzw. einstellbar, um dadurch Abstandsvarianzen zwischen den beiden sich gegenüberstehenden Enden der Stromschienen des ersten und des zweiten Turmsegments auf einfache Weise auszugleichen bzw. anzupassen. Hierbei überbrückt das erfindungsgemäße Schienenverbindungsmittel den Verbindungsbereich bzw. den Flanschverbindungsbereich der beiden Turmsegmente, wobei das Schienenverbindungsstück nach seiner Einpassung zwischen den zu verbindenden Enden der Stromschienen fixierbar ist bzw. fixiert ist und somit starr ausgebildet ist. Dabei ist insbesondere das Schienenverbindungsstück in einer linearen Richtung variabel in seiner Länge anpassbar. Vorzugsweise ist die Länge des Schienenverbindungsstücks zwischen einem Minimum und einem Maximum einstellbar und fixierbar.

Darüber hinaus hat die Erfindung den Vorteil, dass Turmsegmente mit Stromschienen am Herstellungsort der Turmsegmente vormontiert werden, wobei ein vorbestimmter Abstand zwischen den Enden der Turmsegmente und den Enden der Stromschienen bzw. der Stromschienensegmente im entsprechenden Turmsegment eingehalten bzw. ausgebildet ist. Insgesamt ergibt sich dadurch ebenfalls eine einfache Handhabung von Turmsegmenten, da Turmsegmente einer bestimmten (Bau-)Art bzw. einer bestimmten Geometrie bereitgestellt werden, die beliebig und komplementär mit entsprechenden Turmsegmenten einer anderen Art für die Errichtung eines Turms beliebig zueinander ausgewählt bzw. bestimmt werden, wobei es nicht mehr erforderlich ist, dass die Länge der Stromschienen innerhalb der Turmsegmente auf eine eineindeutige Art miteinander funktionskomplementär hergestellt werden müssen. Dies vereinfacht auch den Herstellungsprozess von Turmsegmenten mit Stromschienen.

Insbesondere ist die Gesamtlänge der Stromschienen bzw. Stromschienensegmente in einem Turmsegment kleiner als die Länge oder die Höhe des entsprechenden Turmsegmentes.

Dazu ist weiter vorgesehen, dass die Länge der Stromschienen des ersten bzw. zweiten Turmsegments kleiner als die Länge des ersten bzw. zweiten Turmsegments ist, so dass die Enden der Stromschiene jeweils mit einem vorbestimmten Abstand zu den Enden des Turmsegments innerhalb des Turmsegments angeordnet sind bzw. enden.

Überdies ist gemäß einer weiteren Ausführungsform des Turms vorgesehen, dass das Stromschienenverbindungsstück wenigstens zwei Schienenteile aufweist, die lösbar miteinander und/oder gegeneinander, vorzugsweise linear, verschiebbar ausgebildet sind.

Dazu ist insbesondere vorgesehen, dass wenigstens ein Schienenteil des Stromschienenverbindungsstücks ein Langloch, vorzugsweise in linearer Verschiebungsrichtung, aufweist. Das andere Schienenteil weist dabei ein Verbindungselement auf, das durch das Langloch des anderen Schienenteils hindurchgreift, wodurch eine sichere Führung bzw. eine Verschiebbarkeit der beiden Schienenteile gegeneinander ermöglicht wird. Nach Befestigung der Schienenteile mit den Stromschienen werden die Schienenteile des Stromschienenverbindungsstücks beispielsweise durch einen Bolzen, der durch das Langloch des einen Schienenteils oder durch die Langlöcher der Schienenteile hindurchgreift, durch Anziehen des Bolzens gegeneinander verrutschsicher fixiert.

Durch Verspannen des Bolzens mit einem vorbestimmten Drehmoment wird die elektrische Übertragungssicherheit gewährleistet. Für mehrere Stromschienen eines Schienenpakets sind jeweils erfindungsgemäße Schienenverbindungsstücke vorgesehen, wobei zwischen zwei erfindungsgemäßen Schienenverbindungsstücken Isolatoren vorgesehen sind. Hierbei kann ein Bolzen mehrere Langlöcher von Schienenteilen durchsetzen, wobei vorteilhafterweise der Bolzen gegenüber den Langlöchern isoliert ist. Dies kann z.B. dadurch erfolgen, dass für den Bolzen wenigstens zwei, gegeneinander verschiebbare bzw. ineinander schiebbare, (Isolier-)Hülsen vorgesehen sind, die der Bolzen durchsetzt.

Des Weiteren ist in einer bevorzugten Ausführungsform vorgesehen, dass wenigstens ein Schienenteil eine Kröpfung aufweist, wodurch eine platzsparende Anordnung der Schienenteile des Stromschienenverbindungsstücks zwischen den beiden zu verbindenden Stromschienen erreicht wird.

Sind mehrere Stromschienen eines Schienenpaktes in einem Turmsegment mit den korrespondierenden Stromschienen eines anderen Schienenpaktes im zweiten Turmsegment mittels jeweils eines Schienenverbindungsstücks zu verbinden, können die Schienenteile mit einer Kröpfung unterschiedlich stark gekröpft sein. Beispielsweise können die inneren Schienenteile von mehreren parallel nebeneinander angeordneten Schienenverbindungsstücken weniger stark gekröpft sein als die äußeren Schienenteile mit einer Kröpfung. Daher kann in dem zu überbrückenden Verbindungbereich die Anordnung von mehreren nebeneinander angeordneten Schienenverbindungsstücken bei zu verbindenden Stromschienen von (Strom-)Schienenpaketen dicker ausgebildet sein im Vergleich zu den parallel ausgerichteten Stromschienen der Schienenpakete. Eine die Schienenverbindungsstücke überdeckende Verkleidung ist daher auch im Verbindungsbereich entsprechend erweitert bzw. verbreitert oder breiter ausgebildet.

Des Weiteren wird der Turm vorteilhafterweise dadurch weitergebildet, dass zur Verbindung des Schienenverbindungsstücks und/oder der Schienenteile mit den Stromschienen Verbindungsmittel vorgesehen sind.

Ferner wird die Aufgabe gelöst durch die Verwendung von Steigleitern bei der oder zur Errichtung eines Turms einer Windenergieanlage, wobei der Turm wie voranstehend beschrieben ausgebildet ist oder wird. Zur Vermeidung von Wiederholungen wird auf die obigen Ausführungen ausdrücklich verwiesen.

Darüber hinaus wird die Aufgabe gelöst durch eine Verwendung von Stromschienen in einem Turm einer Windenergieanlage sowie bei der oder zur Errichtung eines Turms, wobei der Turm wie voranstehend mit einem Stromschienensystem ausgebildet ist oder wird. Zur Vermeidung von Wiederholungen wird auf die obigen Ausführungen ausdrücklich verwiesen.

Des Weiteren wird die Aufgabe gelöst durch einen Turm einer Windenergieanlage, wobei der Turm aus mehreren Turmsegmenten errichtet ist oder wird, wobei der Turm gemäß dem voranstehend beschriebenen Verfahren errichtet ist bzw. wird.

Im Rahmen der Erfindung ist es selbstverständlich, dass die Schienenteile bzw. das Stromschienenverbindungsstück elektrisch leitfähig ist, um somit Strom durch die verbundenen Stromschienen der Turmsegmente zu leiten. Typische Stromschienensysteme, die in Windenergieanlagen eingesetzt werden, sind beispielsweise Schienenverteilsysteme mit der Bezeichnung "BD" oder "LD" der Firma Siemens.

Gemäß den vorgeschlagenen erfindungsgemäßen Lösungen werden sowohl bei der Verwendung eines Steigleiterzwischenstücks und/oder eines Stromschienenverbindungsstücks im Verbindungsbereich bzw. im Flanschbereich von zwei Turmsegmenten linear langgestreckte Bauteile, die sich entlang der Turmwandungen der Türme der Windenergieanlagen erstrecken, auf einfache Weise überbrückt, wobei der Abstand zwischen den Enden der zu verbindenden linearen Bauteile auf einfache Weise überbrückt wird und gleichzeitig ein Längenausgleich oder Längentoleranzausgleich in linearer Richtung der Bauteile erfolgt. Hierbei werden die linearen Bauteile nach der Herstellung der Turmsegmente vormontiert, wobei die linearen Bauteile nicht aus den Turmsegmenten hinausragen und somit beispielsweise bei einem Transport der Turmsegmente zum Errichtungsort beschädigt werden können.

Darüber hinaus können die Turmsegmente beliebig und nicht nur für einen einzigen Turm bzw. bei dessen Errichtung verwendet bzw. eingesetzt werden, so dass beispielsweise ein beliebiges Turmsegment einer bestimmten Bauart komplementär mit einem anderen Turmsegment einer anderen Bauart verbunden wird und es somit nicht mehr erforderlich ist, dass nur zwei genau vorbestimmte individuell aufeinander abgestimmte Turmsegmente miteinander verbunden werden. Vielmehr ist es gemäß der Erfindung möglich, dass ein beliebiges Turmsegment mit einer vormontierten linear angeordneten Steigleiter und/oder einer vormontierten linear angeordneten Stromschiene mit einem beliebigen anderen zweiten Turmsegment verbunden werden kann, wobei dieses zweite Turmsegment ebenfalls eine vormontierte Steigleiter und/oder eine vormontierte Stromschiene aufweist.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Nachfolgend wird die Erfindung anhand von Ausführungsbeispielen ohne Beschränkung des allgemeinen Erfindungsgedankens exemplarisch beschrieben, wobei bezüglich aller im Text nicht näher erläuterten erfindungsgemäßen Einzelheiten ausdrücklich auf die Figuren verwiesen wird. Es zeigen:
- Fig. 1 eine: schematische Darstellung einer Windenergieanlage;
- Fig. 2 eine: schematische Innenansicht eines Turmabschnitts eines Turms einer Windenergieanlage im Querschnitt;
- Fig. 3 eine: schematische Ansicht eines erfindungsgemäßen Steigleiterverbindungszwischenstücks;
- Fig. 4a, 4b: schematisch verschiedene Ansichten eines Stromschienenverbindungsstücks;
- Fig. 4c, 4d: schematisch jeweils eine Verbindung von mehreren Stromschienenteilen;
- Fig. 5: schematisch ein Verfahren zum Errichten eines Turms einer Windenergieanlage.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

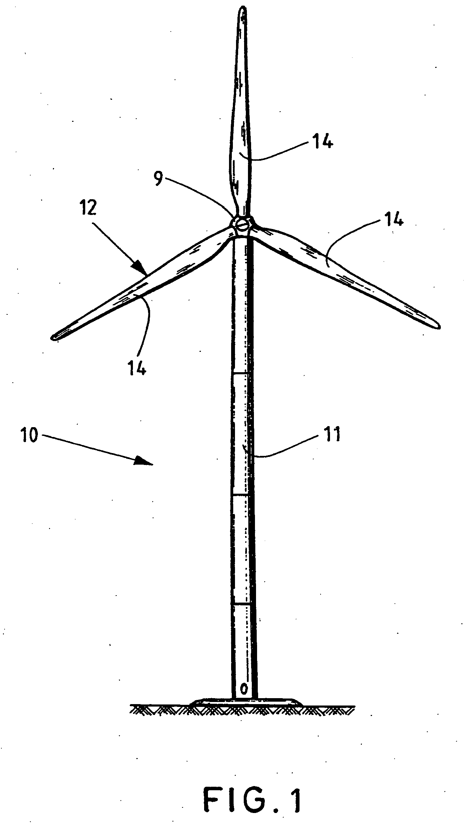

Fig. 1 zeigt eine schematische Darstellung einer Windenergieanlage 10. Die Windenergieanlage 10 weist einen vertikal ausgerichteten Turm 11 auf und einen Rotor 12, der drei Rotorblätter 14 umfasst, die auf einer Rotornabe 9 angebracht sind. Bei Windeinfall dreht der Rotor 12 in an sich bekannter Weise. Hierdurch kann Leistung von einem an den Rotor 12 bzw. an die Rotornabe 9 angeschlossenen Generator in einem Maschinenhaus auf dem Turm 11 erzeugt werden und in ein Verbrauchernetz abgegeben werden.

Der Turm 11 ist hierbei als Stahlrohrturm ausgebildet und besteht aus mehreren, miteinander verbundenen Rohrturmabschnitten. Die Rohrturmabschnitte werden auch als Turmschuss bezeichnet, so dass ein Rohrturm als mehrschüssiger Rohrturm ausgebildet ist.

Bei dem in Fig. 1 dargestellten Ausführungsbeispiel einer Windenergieanlage 10 besteht der Turm 11 aus mehreren Turmsegmenten, die untereinander im Wesentlichen denselben Aufbau haben. Vorzugsweise bestehen die Turmsegmente aus hohlzylindrischen Rohrstücken, die aus entsprechend geeignetem Stahl gefertigt sind, wobei jedes zylindrische Turmsegment sich von unten nach oben konisch verjüngen kann. Jedes der Turmsegmente weist eine durchgängige, geschlossene, hohlzylindrische Turmwandung auf, die sich vom unteren Flansch eines Turmsegments zu einem oberen Flansch des Turmsegments erstreckt, wobei die Flansche der Turmsegmente im Wesentlichen ringförmig ausgebildet sind und sich von der Turmwandung ausgehend nach innen in den Innenraum der Turmsegmente hinein erstrecken.

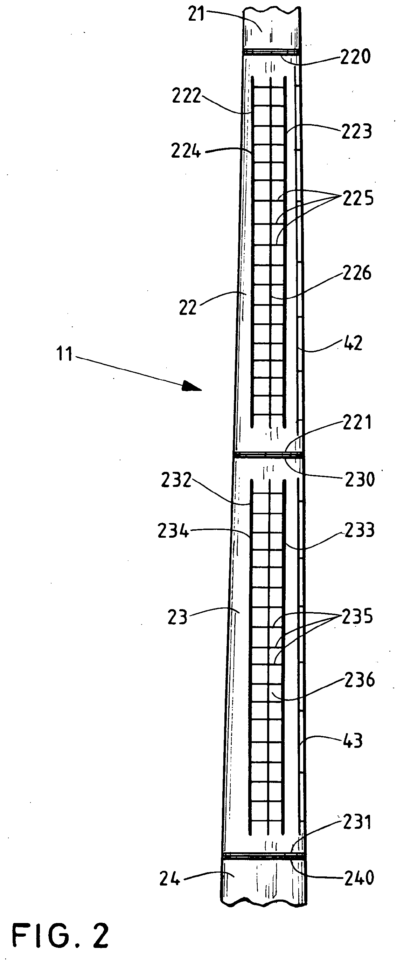

Fig. 2 zeigt schematisch einen Turmabschnitt eines Turms 11 einer Windenergieanlage, wobei der Turm 11 aus mehreren Turmsegmenten 21, 22, 23, 24 aufgebaut ist. Beispielsweise verfügt das Turmsegment 22 am oberen Ende über einen Endflansch 220 und an der Unterseite über einen endseitigen Flanschring 221. Das unter dem Turmsegment 22 angeordnete Turmsegment 23 verfügt über einen oberseitigen Flanschring 230 und einen unterseitigen Flanschring 231. Der Flanschring 231 des Turmsegments 23 ist mit einem Flanschring 240 des unteren Turmsegments 24 verbunden, während der obere Flanschring 230 des Turmsegments 23 mit dem unteren Flanschring 221 des Turmsegments 22 verbunden ist. An der Oberseite des Flanschrings 220 des Turmsegments 22 ist der Flanschring 220 mit einem Flanschring 211 des oberen Turmsegments 21 verbunden.

Im Inneren des Turms 11 sind in den jeweiligen Turmsegmenten, beispielsweise in den Turmsegmenten 23 und 22, Steigleitern 222, 232 an der Turminnenwandung befestigt. Entsprechende Befestigungsmittel für Steigleitern an Turminnenwandungen sind dem Fachmann bekannt.

Die Steigleiter 222 des Turmsegments 22 ist kleiner bzw. kürzer als die Länge des Turmsegments 22, so dass die Steigleiter 222 zwischen den Flanschringen 220 und 221 bei Fertigung des Turmsegments 22 vormontiert wird. Hierbei ragen die Enden der Steigleiter 222 nicht über die Flanschringe 220 und 221 hinaus. Dies gilt in entsprechender Weise auch für die Steigleiter 232, die an der Turminnenwandung des Turmsegments 23 angeordnet ist.

Die Steigleitern 222 und 232 der Turmsegmente 22 bzw. 23 verfügen über langgestreckte Leiterholme, zwischen denen Trittstufen 225 bzw. Trittsprossen in regelmäßigen Abständen angeordnet sind. Entsprechend verfügt die Steigleiter 232 über zwischen den Flanschringen 230 und 231 längs verlaufenden Leiterholmen 233, 234 angeordnete Trittstufen 235. Zwischen den Leiterholmen 223, 224 der Steigleiter 222 verläuft als Steigschutzsicherung für Personen eine Steigschutzschiene 226. Die Steigschutzschiene der Steigleiter 232 hat das Bezugszeichen 236.

Die Leiterholme 223, 224, sowie 233, 234 sind bevorzugterweise als Hohlprofile ausgebildet und vorzugsweise aus Aluminium gefertigt. Die Leiterholme 223, 224 sowie 233, 234 der Steigleitern 222, 232 enden in vorbestimmten Abständen zu den oberen und unteren Flanschringen 220, 221 sowie 230, 231 der entsprechenden Turmsegmente 22 bzw. 23, so dass beispielsweise die oberen Enden der Leiterholme 233, 234 der Steigleiter 232 (im Turmsegment 23) von den unteren Enden der Leiterholme 223, 224 der Steigleiter 222 (im Turmsegment 22) beabstandet sind. Hierbei sind die Enden der Steigleitern 222, 232 von dem Verbindungsbereich der Turmsegmente 22, 23 beabstandet, wobei der Verbindungsbereich durch eine Flanschverbindung der Flanschringe 221, 230 gebildet wird.

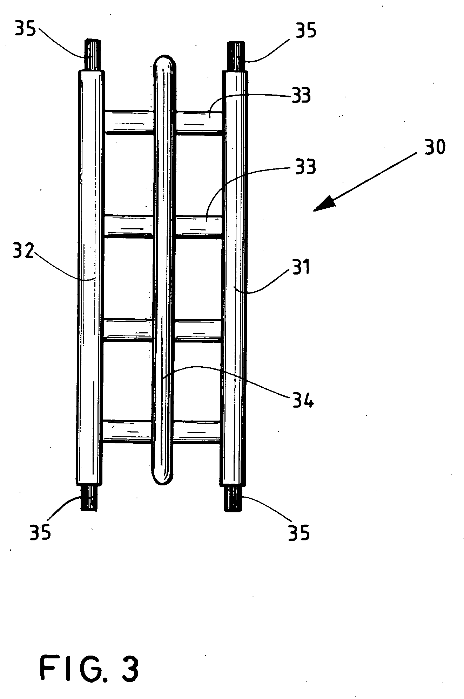

Bei Errichtung des Turms, d.h. beispielsweise beim Aufsetzen des Turmsegments 22 auf das Turmsegment 23, wird zwischen die Leiterholme 233, 234 der Steigleiter 232 und den unteren Enden der Leiterholme 223, 224 der Steigleiter 222 ein Steigleiterzwischenstück, wie es beispielsweise in Fig. 3 dargestellt ist, eingebracht. Durch die Anordnung des Steigleiterzwischenstücks 30 (Fig. 3) zwischen den vertikal ausgerichteten Steigleitern 222, 232 bzw. deren Enden werden die beiden Steigleitern 222, 232 miteinander verbunden, wobei gleichzeitig durch die Anordnung des Steigleiterzwischenstücks die fertigungsbedingten Längendifferenzen zwischen den Enden von zu verbindenden Steigleitern von zwei beliebigen Turmsegmenten bzw. von zwei vormontierten Steigleitern von zwei Turmsegmenten ausgeglichen werden.

Fig. 3 zeigt schematisch ein erfindungsgemäßes Steigleiterzwischenstück 30, wobei das Steigleiterzwischenstück 30 über zwei parallel zueinander verlaufende Leiterholme 31, 32 verfügt, zwischen denen sprossenartige Trittstufen 33 angeordnet sind. Zwischen den Leiterholmen 31, 32 ist ein Steigschutzschienenabschnitt 34 angeordnet. An den oberen und unteren Enden des Steigleiterzwischenstücks sind Holmverbindungsstücke 35 montiert und beispielsweise mit Schrauben oder dergleichen in den Leiterholmen 31, 32 fixiert, wobei die Holmverbindungsstücke 35 in die hohlen Leiterholme 223, 224 bzw. 233, 234 der Steigleitern 222 bzw. 232 bzw. deren hohlen Leiterholmenden bei der Turmerrichtung eingebracht werden. Dadurch, dass die Holmverbindungsstücke 35 an den Leiterholmen 31, 32 angeordnet sind, ist die Länge der Steigleiterzwischenstücke größer als der Abstand der Enden von zwei zueinander verbindenden Steigleitern.

Durch die Verlängerungen der Leiterholme 31, 32 durch Anordnung der Holmverbindungsstücke 35 in den hohlen Leiterholmen 31, 32 der Steigleitern der Turmsegmente werden auf einfache Weise die Fertigungstoleranzen bei der Vormontage von Steigleitern an bzw. in den Turmsegmenten ausgeglichen, wobei insbesondere die Enden der Steigleitern, die bei Anordnung eines Turmsegments auf einem anderen Turmsegments sich unten befinden, in stets gleichen Abständen von den unteren Enden bzw. den unteren Flanschringen der Turmsegmente enden oder beginnen bzw. angeordnet sind.

Durch die Verwendung des erfindungsgemäßen Steigleiterzwischenstücks 30 bei der Montage bzw. Errichtung eines Turms einer Windenergieanlage zwischen zwei Steigleitern im Verbindungsbereich von zwei Turmsegmenten werden die Längentoleranzen ausgeglichen, wobei es zusätzlich möglich ist, ein beliebiges Turmsegment einer bestimmten Bauart auszuwählen, da alle Turmsegmente dieser Bauart eine Steigleiter aufweisen, deren Enden einer vormontierten Steigleiter in einem vorbestimmten Abstand bzw. einem definierten Abstand zu dem unteren Flanschring angeordnet sind. Hierdurch ergibt sich eine leichtere Handhabung der Turmsegmente.

Eine vereinfachte Handhabung des Steigleiterzwischenstücks 30 bei der Errichtung eines Turms einer Windenergieanlage ergibt sich ferner dadurch, dass das Steigleiterverbindungsstück 30 lediglich die Leiterholme der Steigleitern miteinander verbindet, wodurch das Steigleiterzwischenstück den Verbindungsbereich der Turmsegmente überbrückt und im Verbindungsbereich von zwei Turmsegmenten keinen Kontakt zu der Innenwandung im Bereich der Verbindung der Turmsegmente aufweist.

Wie aus Fig. 3 ferner hervorgeht, verfügt das Steigleiterzwischenstück 30 ferner über einen Steigschutzschienenabschnitt 34, zwischen den Leiterholmen 31, 32, dessen Länge bei Verbindung von zwei Steigleitern von zwei Turmsegmenten entsprechend, bevorzugterweise auf manuelle Weise, angepasst wird. Mittels des Steigschutzschienenabschnitts 34 werden die Steigschutzschienen der Steigleitern in den Turmsegmenten verbunden. Beispielsweise wird bei der Montage von zwei Turmsegmenten der Steigschutzschienenabschnitt 34 vor Ort durch Ablängung mittels eines Längenmaßes, z.B. Zollstock oder dergleichen, und Zusägen auf das genaue Montagemaß durch Monteure angepasst.

In Fig. 2 ist ferner dargestellt, dass die Turmsegmente 22, 23 entlang der inneren Turmwandungen der Turmsegmente über linear verlaufende Stromschienen 42, 43 verfügen, die mit entsprechenden Befestigungsmitteln an der Innenseite der Turmwandung befestigt sind. Die Stromschienen 42, 43 enden wie die Steigleitern 222, 223 in vorbestimmten Abständen zu den entsprechenden Flanschringen 220, 221 sowie 230, 231 bzw. Enden der Turmsegmente 22, 23. Die Stromschienen 42, 43 sind dabei als geradlinige bzw. linear verlaufende Bauteile ausgerichtet, so dass mittels der Stromschienen die elektrische Energie, die in einem Generator im Maschinenhaus auf dem Turm erzeugt wird, zu einem Leistungsmodul oder einem Verbraucher übertragen wird. Hierbei sind die Stromschienen 42, 43 bevorzugterweise bei der Herstellung der Turmsegmente 22, 23 vormontiert, so dass die segmentierten Stromschienen 42, 43 in den Turmsegmenten 22, 23 vormontiert angeordnet werden. Dabei ragen die Enden der Stromschienen 42, 43 nicht über die Enden der Turmsegmente 22, 23 hinaus.

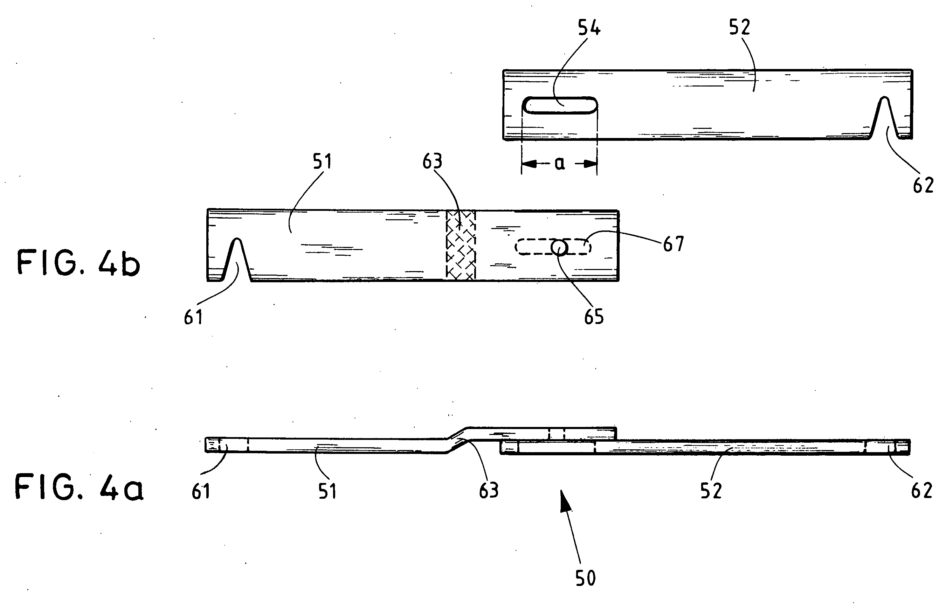

Zur Verbindung der Stromschienen 42, 43 sind gemäß der Erfindung längenanpassbare nicht-biegbare Schienenverbindungsstücke vorgesehen, wie sie beispielsweise in Fig. 4a, 4b dargestellt sind.

Fig. 4a zeigt eine Draufsicht auf ein erfindungsgemäßes Schienenverbindungsstück und Fig. 4b zeigt die Schienenteile des Schienenverbindungsstücks in einer seitlichen Darstellung.

Fig. 4a zeigt ein erfindungsgemäßes Schienenverbindungsstück 50, das aus zwei geraden, nicht flexiblen, d.h. starren Schienenteilen 51, 52 besteht, wobei in den äußeren Endbereichen der Schienenteile 51, 52 nutartige Vertiefungen 61, 62 ausgebildet sind, die mit den Stromschienen in den Turmsegmenten in Kontakt gebracht werden. Das Schienenteil 51 ist auf der anderen Seite mit einer Kröpfung 63 gebogen ausgebildet, so dass das der Vertiefung 61 abgewandte Ende des Schienenteils 51 parallel zu dem geradlinigen Schienenteil 52 angeordnet wird. Das Schienenteil 52 verfügt auf der äußeren Seite, die dem anderen Schienenteil 51 zugewandt ist, über ein Langloch 54 mit einer vorbestimmtem Länge a, das von einem Fixierbolzen 65 des Schienenteils 51 durchsetzt wird. Die Länge a des Langlochs 54 kann zwischen 10 mm bis 100 mm, vorzugsweise zwischen 20 mm bis 80 mm, weiter insbesondere zwischen 20 mm bis 50 mm, ausgebildet sein.

Ein Fixierbolzen 65 ist auf der Seite des Schienenteils 51 angeordnet, die dem anderen mit dem Schienenteil 51 korrespondierenden Schienenteil 52 zugeordnet ist. Aufgrund der Kröpfung 63 sowie des Langlochs 54 sind die Schienenteile 51, 52 gegeneinander in linearer Richtung verschiebbar, so dass bei Verwendung des Schienenverbindungsstücks 50 aus den beiden Schienenteilen 51, 52 die Stromschienen 42, 43 im Verbindungsbereich der Turmsegmente 23, 22 (vgl. Fig. 2) im Bereich deren Flanschringe 221, 230 miteinander verbunden werden, wodurch das Schienenverbindungsstück 50 den Verbindungsbereich von zwei Turmsegmenten ohne Kontakt zu der Turmwandungen oder den Flanschringen des Verbindungsbereichs geradlinig überbrückt und die Stromschienen verbunden sind.

In einer Alternative kann das Schienenteil 51 auch ein Langloch aufweisen. Dieses Langloch ist in Fig. 4b beim Schienenteil 51 gestrichelt eingezeichnet und mit dem Bezugszeichen 67 versehen.

Dadurch, dass die Schienenteile 51, 52 gegeneinander in linearer Richtung verschiebbar sind, kann der Abstand zwischen den zwei Stromschienen 42, 43 entsprechend auf einfache Weise in seiner Länge angepasst bzw. ausgeglichen werden. Nach Verbindung der beiden Stromschienen 42, 43 wird der Fixierbolzen 65 angezogen, wodurch eine dauerhafte fixierte Einstellung der Schienenteile 51, 52 erreicht wird.

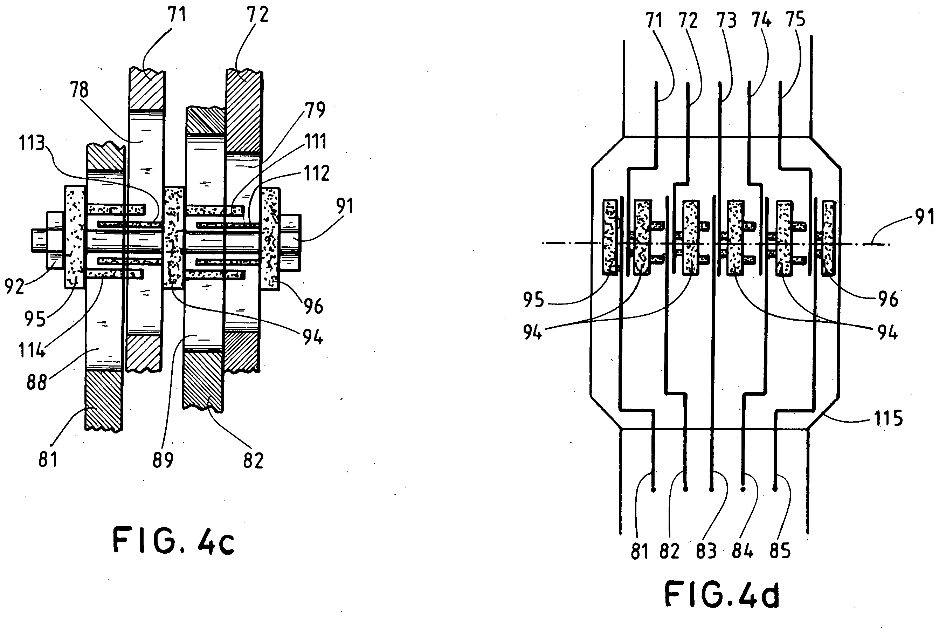

Fig. 4c zeigt schematisch einen Querschnitt des Verbindungsbereichs von mehreren Schienenteilen 71, 72 und 81, 82 bzw.

Stromschienen. Hierbei wird das Schienenteil 71 mit dem Schienenteil 81 und das Schienenteil 72 mit dem Schienenteil 82 jeweils in berührendem Kontakt miteinander verbunden, um einen elektrischen Kontakt zwischen den Schienenteilen 71 und 81 sowie den Schienenteilen 72 und 82 herzustellen. Sowohl die Schienenteile 71, 72 als auch die Schienenteile 81, 82 verfügen über entsprechende Langlöcher 78, 79 bzw. 88 und 89, die von einem Bolzen 91 bzw. einer Verbindungsschraube durchsetzt werden, wobei durch Anziehen einer äußeren Mutter 92 am Bolzen 91 die dazwischen angeordneten Schienenteile 71, 81 und die Schienenteile 72 und 82 verspannt werden bzw. sind.

Um die elektrisch leitenden Schienenteile 71, 81 von den anderen miteinander in Kontakt stehenden Schienenteilen 72, 82 elektrisch voneinander zu isolieren, ist zwischen dem Schienenteil 71 und dem Schienenteil 82 ein Isolator 94 angeordnet. Darüber hinaus sind an den Außenseiten der Schienenteile 81 und 72 ebenfalls Isolatoren 95, 96 vorgesehen, um die Schienenpaare 71, 81 und 72, 82 voneinander zu isolieren. Ferner weist der mittige Isolator 94 eine Außenhülse 111 auf, in die eine Innenhülse 112 des äußeren Isolators 96 eingreift. Ferner verfügt der Isolator 94 auf der der Außenhülse 111 abgewandten Seite über eine isolierende Innenhülse 113, die von einer isolierenden Außenhülse 114 des Isolators 95 umgeben ist. Der Bolzen 91 durchsetzt die Schienenteile 71, 72 sowie 81 und 82, wobei der Bolzen 91 durch die ebenfalls von ihm durchsetzten isolierenden Innen- und Außenhülsen 111, 112, 113, 114 der Isolatoren 94, 95 und 96 elektrisch von den elektrisch leitfähigen Schienenteilen 71, 72 sowie 81 und 82 isoliert ist.

Fig. 4d zeigt schematisch im Querschnitt die Verbindung von mehreren Schienenteilen 71, 72, 73, 74 und 75 mit elektrisch leitfähigen Schienenteilen 81, 82, 83, 84, 85, wobei die Schienenteile von einem schematisch gezeichneten Bolzen 91 quer durchsetzt werden. Zwischen den Schienenteilpaaren 71, 81 sowie 72, 82 und 73, 83 und 74, 84 und 75, 85 sind jeweils Isolatoren 94 angeordnet, die isolierende Innen- und Außenhülsen für den Bolzen 91 aufweisen und Langlöcher der Schienenteile durchsetzen. Ferner sind an den Außenseiten des Schienenverbunds Isolatoren 95, 96 angeordnet.

Die Schienenteile 71, 72 sowie 74, 75 weisen im Verbindungsbereich Kröpfungen auf, während das Schienenteil 73 nicht gekröpft bzw. gerade ausgebildet ist. Entsprechend sind die Schienenteile 81, 82, 84 und 85 ebenfalls im Verbindungsbereich gekröpft, während das mittig angeordnete Schienenteil 83 nicht gekröpft ist bzw. gerade ist. Durch die Verwendung von unterschiedlich gekröpften Schienenteilen ist es möglich, mehrere Schienenteile im Innern eines Turms im Verbindungsbereich bzw. der Flanschverbindungen der Turmsegmente auf einfache Weise miteinander zu verbinden, wobei der Bereich der miteinander verbundenen Schienenteile bzw. Stromschienen gegenüber den geraden Stromschienen bzw. den Stromschienenpaketen entlang der Turmsegmente verbreitert ist und von einer ebenfalls verbreiterten Verkleidung 115 umgeben ist.

Die äußeren Schienenteile 71, 75 bzw. 81, 85 sind im Verbindungsbereich stärker gekröpft als die innenliegenden Schienenteile 72, 74 bzw. 82, 84, so dass mehrere Schienenteile eines Schienenpakets in einem Turmsegment mit den korrespondierenden Schienenteilen eines anderen Schienenpakets in einem zweiten Turmsegment im Verbindungsbereich der beiden Turmsegmente miteinander verbunden werden. Der Vorteil dieser Anordnung liegt darin, dass die Stromschienen bzw. die Schienenteile 71, 72, 73, 74, 75 sowie 81, 82, 83, 84, 85 sehr kompakt angeordnet werden können und nur im Verbindungsbereich zusätzlicher Bauraum geschaffen bzw. bereitgestellt werden muss.

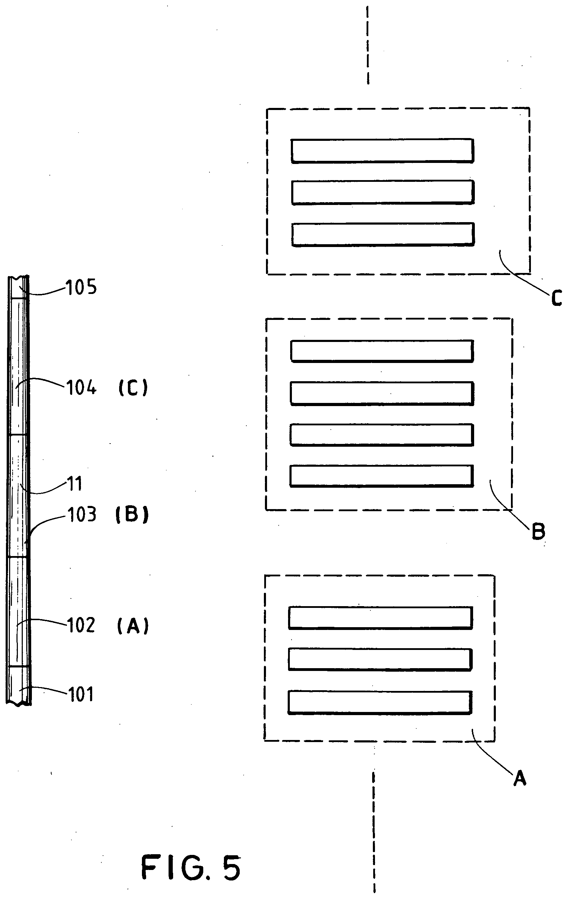

In Fig. 5 ist schematisch dargestellt, wie ein Turm einer Windenergieanlage aus einer Vielzahl von nicht-individualisierten Turmsegmenten errichtet wird. In Fig. 5 ist im linken Bereich schematisch ein Abschnitt eines Turms 11 einer Windenergieanlage dargestellt.

Dieser Turm 11 ist aus mehreren Turmsegmenten 101, 102, 103, 104 und 105 zusammenmontiert, wobei die dafür verwendeten Turmsegmente 101, 102, 103, 104 und 105 bei der Herstellung und vor der Montage des Turms 11 nicht individuell aufeinander angepasst wurden. Stattdessen wurden nicht-individualisierte Turmsegmente verwendet.

Zunächst werden mehrere Turmsegmente vor der Montage des Turms hergestellt. Als Turmsegmente werden einige Turmsegmente mehrerer, insbesondere mehr als drei, Bauarttypen hergestellt. In Fig. 5 sind im rechten Bereich beispielhaft mehrere (Vorrats-)Lager A, B, C oder Magazine dargestellt, in denen einige Turmsegmente der entsprechenden Bauart A, B und C nach ihrer Herstellung und vor der Montage des Turms gelagert bzw. bereitgestellt werden. Die Turmsegmente der Bauart A werden dem entsprechenden Lager A, die Turmsegmente der Bauart B werden dem entsprechenden Lager B und die Turmsegmente der Bauart C werden dem entsprechenden Lager C zugeordnet usw.

Die Turmsegmente der Bauarten A, B und C sind jeweils standardisiert ausgebildet, so dass es bauartbedingt keine individuellen Unterschiede zwischen den Turmsegmenten einer Bauart gibt. Darüber hinaus unterscheiden sich Bauart A der Turmsegmente von der Bauart B und C. Und auch die Bauarten B und C unterscheiden sich, so dass beim Bau eines Turms jeweils irgendein beliebiges Turmsegment der Bauart A, jeweils irgendein beliebiges Turmsegment der Bauart B und jeweils irgendein beliebiges Turmsegment der Bauart C usw. aus den entsprechenden Lagern genommen wird und am Errichtungsort des Turms für die Montage bereitgestellt werden.

Beispielsweise wurden als Turmsegment 102 ein beliebiges Turmsegment der standardisierten Bauart A, als Turmsegment 103 ein beliebiges Turmsegment der standardisierten Bauart B und als Turmsegment 104 ein beliebiges Turmsegment der standardisierten Bauart C verwendet, wobei die Turmsegmente bevorzugterweise an ihren Enden Flanschringe aufweisen, so dass zwischen jeweils zwei Turmsegmenten eine Flanschverbindung hergestellt wird. Selbstverständlich können im Rahmen der Erfindung auch weitere standardisierte Turmsegment-Bauarten bereitgestellt sein.

Die Turmsegmente der standardisierten Bauarten A, B und C können weiterhin im Inneren Baugruppeneinheiten oder Vorrichtungen wie z.B. Steigleitern und/oder Stromschienen aufweisen, die miteinander verbunden werden müssen. Um diese entlang der Turmwandung verlaufenden bzw. angeordneten Baugruppen der Turmsegmente miteinander zu verbinden, werden in der Verbindungslänge variabel und einstellbare Verbindungsmittel und/oder Längentoleranz ausgleichende Verbindungsmittel eingesetzt, so dass die individuelle Anpassung eines aus standardisierten bzw. nicht-individualisierten Turmsegmenten errichteten Turms mittels der Verbindungsmittel erfolgt.

### Bezugszeichenliste

- 9: Rotornabe
- 10: Windenergieanlage
- 11: Turm
- 12: Rotor
- 14: Rotorblatt
- 21: Turmsegment
- 22: Turmsegment
- 23: Turmsegment
- 24: Turmsegment
- 30: Steigleiterzwischenstück
- 31: Leiterholm
- 32: Leiterholm
- 33: Trittstufe
- 34: Steigschutzschienenabschnitt
- 35: Holmverbindungstück
- 42: Stromschiene
- 43: Stromschiene
- 50: Schienenverbindungsstück
- 51: Schienenteil
- 52: Schienenteil
- 54: Langloch
- 61: Vertiefung
- 62: Vertiefung
- 63: Kröpfung
- 65: Fixierbolzen
- 67: Langloch
- 71: Schienenteil
- 72: Schienenteil
- 73: Schienenteil
- 74: Schienenteil
- 75: Schienenteil
- 78: Langloch
- 79: Langloch
- 81: Schienenteil
- 82: Schienenteil
- 83: Schienenteil
- 84: Schienenteil
- 85: Schienenteil
- 88: Langloch
- 89: Langloch
- 91: Bolzen
- 92: Mutter
- 94: Isolator
- 95: Isolator
- 96: Isolator
- 101: Turmsegment
- 102: Turmsegment
- 103: Turmsegment
- 104: Turmsegment
- 105: Turmsegment
- 111: Außenhülse
- 112: Innenhülse
- 113: Innenhülse
- 114: Außenhülse
- 115: Verkleidung
- 220: Flanschring
- 221: Flanschring
- 222: Steigleiter
- 223: Leiterholm
- 224: Leiterholm
- 225: Trittstufe
- 226: Steigschutzschiene
- 230: Flanschring
- 231: Flanschring
- 232: Steigleiter
- 233: Leiterholm
- 234: Leiterholm
- 235: Trittstufe
- 240: Flanschring

- A: Bauart eines Turmsegments
- B: Bauart eines Turmsegments
- C: Bauart eines Turmsegments

- a: Länge

## Patentansprüche

1. Verfahren zum Errichten eines Turms (11) einer Windenergieanlage (10) aus wenigstens drei rohrförmigen Turmsegmenten (21-24,101-105) verschiedener Bauarten A, B, C, wobei ein Turmsegment (21 - 24, 101 - 105) an seinen Enden mit jeweils einem anderen Turmsegment (21 - 24, 101 - 105) verbunden wird,
- wobei die Turmsegmente (21 - 24) in einer vorbestimmten Reihenfolge der Art Turmsegment A - Turmsegment B - Turmsegment C übereinander angeordnet werden,
- wobei das erste Turmsegment A aus einer bereitgestellten Vielzahl i ≥ 2 von untereinander baugleichen ersten und gegeneinander austauschbaren Turmsegmenten Aᵢ beliebig ausgewählt wird,
- wobei das zweite Turmsegment B aus einer bereitgestellten Vielzahl m ≥ 2 von untereinander baugleichen zweiten und gegeneinander austauschbaren Turmsegmenten Bₘ beliebig ausgewählt wird,
- wobei das dritte Turmsegment C aus einer bereitgestellten Vielzahl n ≥ 2 von untereinander baugleichen dritten und gegeneinander austauschbaren Turmsegmenten Cₙ beliebig ausgewählt wird,
wobei die Turmsegmente Aᵢ, Bₘ, Cₙ im Inneren vormontierte, als lineare Bauteile ausgeführte Baugruppen (51, 52, 71 - 75, 81 - 82, 222, 232) aufweisen, die unter Verwendung von Baugruppenlängenadaptern (30, 50) miteinander verbunden werden, wobei die Turmsegmente Aᵢ, Bₘ, Cₙ vormontierte Stromleitungsmittel (51, 52, 71 - 75, 81 - 85) im Inneren aufweisen, wobei die Stromleitungsmittel (51, 52, 71 - 75, 81 - 85) der Turmsegmente (21 - 24, 101 - 105) unter Verwendung von Stromleitungslängenausgleichsmitteln (50) bei Errichtung des Turms (11) miteinander verbunden werden.

2. Verfahren nach Anspruch 1, **dadurch gekennzeichnet, dass** die Turmsegmente Aᵢ, Bₘ, Cₙ vormontierte Steigleitern (222, 232) im Inneren aufweisen, wobei die Steigleitern (222, 232) der Turmsegmente (21 - 24, 101 - 105) unter Verwendung von Steigleiterlängenausgleichsmitteln (30) bei Errichtung des Turms (11) miteinander verbunden werden.

3. Verfahren nach Anspruch 1 oder 2, **dadurch gekennzeichnet, dass** der Turm (11) aus mehreren Turmsegmenten (22, 23) errichtet wird oder ist, wobei zwei Turmsegmente (22, 23) in einem gemeinsamen Verbindungsbereich miteinander verbunden werden oder sind, wobei ein erstes Turmsegment (23) und ein zweites Turmsegment (22) im Inneren jeweils eine Steigleiter (232, 222), die jeweils wenigstens einen Leiterholm (223, 224; 233, 234) aufweist, aufweisen, wobei bei Verbindung des ersten Turmsegments (23) mit dem zweiten Turmsegment (22) der oder die Leiterholme (233, 234) im ersten Turmsegment (23) im Verbindungsbereich von dem oder den Leiterholmen (223, 224) im zweiten Turmsegment (22) beabstandet sind, wobei, vorzugsweise bei Errichtung des Turms (11) oder bei oder während der Montage der Turmsegmente (22, 23), im Verbindungsbereich unter Verwendung eines den Verbindungsbereich der Turmsegmente (22, 23) überbrückenden Steigleiterzwischenstücks (30) der oder die Leiterholme (233, 234) des ersten Turmsegments (23) mit dem oder den Leiterholmen (223, 224) des zweiten Turmsegments (22) miteinander verbunden werden oder sind.

4. Verfahren nach Anspruch 3, **dadurch gekennzeichnet, dass** das Steigleiterzwischenstück (30) ohne Befestigung zu den Turmsegmenten (22, 23) oder dem Verbindungsbereich der Turmsegmente (22, 23) zwischen den Steigleitern (222, 232) der Turmsegmente (22, 23) angeordnet wird oder ist und/oder dass auf das Steigleiterzwischenstück (30) wirkende Belastungskräfte auf die untere Steigleiter (232) und/oder auf die obere Steigleiter (222) abgeleitet werden oder sind.

5. Verfahren nach Anspruch 3 oder 4, **dadurch gekennzeichnet, dass** mittels des Steigleiterzwischenstücks (30) im zwischen den Steigleitern (222, 232) angeordneten Zustand Längentoleranzen von bis zu 200 mm, insbesondere von bis zu 100 mm, weiter vorzugsweise von bis zu 40 mm, und/oder Seitentoleranzen von bis zu 200 mm, insbesondere von bis zu 100 mm, weiter vorzugsweise von bis zu 50 mm, ausgeglichen werden.

6. Verfahren nach einem der Ansprüche 3 bis 5, **dadurch gekennzeichnet, dass** ein Längentoleranzausgleich bei zwischen den Steigleitern (222, 232) angeordnetem Steigleiterzwischenstück (30) zwischen der unteren Trittstufe des Steigleiterzwischenstücks (20) und oberen Trittstufe der unteren Steigleiter (232) und/oder zwischen der oberen Trittstufe des Steigleiterzwischenstücks (20) und unteren Trittstufe der oberen Steigleiter (232) erfolgt.

7. Verfahren nach einem der Ansprüche 3 bis 6, **dadurch gekennzeichnet, dass** die Steigleiter (232) des ersten Turmsegments (23) und/oder die Steigleiter (222) des zweiten Turmsegments (22) eine Steigschutzschiene (236, 226) aufweisen, die im Wesentlichen dieselbe Länge wie die Steigleitern (222, 232) aufweist, wobei insbesondere zwischen den Enden der zu verbindenden Steigschutzschienen (236, 226) des ersten und des zweiten Turmsegments (23, 22) eine Steigschutzschiene (34) des Steigleiterzwischenstücks (30) eingepasst ist oder wird.

8. Verfahren nach einem der Ansprüche 3 bis 7, **dadurch gekennzeichnet, dass** die Länge der Steigleiter (232) des ersten Turmsegments (23) kleiner als die Länge des ersten Turmsegments (23) ist, so dass die Enden der Steigleiter (232) jeweils mit einem vorbestimmten Abstand zu den Enden des Turmsegments (23) innerhalb des Turmsegments (23) angeordnet sind, wobei insbesondere die Länge der Steigleiter (222) des zweiten Turmsegments (22) kleiner als die Länge des zweiten Turmsegments (22) ist, so dass die Enden der Steigleiter (222) jeweils mit einem vorbestimmten Abschnitt zu den Enden des Turmsegments (22) innerhalb des Turmsegments (22) angeordnet sind.

9. Verfahren nach einem der Ansprüche 1 bis 8, **dadurch gekennzeichnet, dass** der Turm (11) aus mehreren Turmsegmenten (22, 23) errichtet wird oder ist, wobei zwei Turmsegmente (22, 23) in einem gemeinsamen Verbindungsbereich miteinander verbunden werden oder sind, wobei ein erstes Turmsegment (23) und ein zweites Turmsegment (22) im Inneren jeweils eine starre Stromschiene (43, 42) aufweisen, wobei bei Verbindung des ersten Turmsegments (23) mit dem zweiten Turmsegment (22) im Verbindungsbereich die Stromschiene (43) im ersten Turmsegment (23) von der Stromschiene (42) im zweiten Turmsegment (22) beabstandet ist, wobei unter Verwendung eines, den Verbindungsbereich der Turmsegmente (22, 23) überbrückenden und in seiner Länge variabel anpassbaren, insbesondere variabel in der Länge einstellbaren, Schienenverbindungsstücks (50) die Stromschiene (43) des ersten Turmsegments (23) mit der Stromschiene (42) des zweiten Turmsegments (22) miteinander verbunden werden oder sind.

10. Verfahren nach Anspruch 9, **dadurch gekennzeichnet, dass** das Stromschienenverbindungsstück (50) wenigstens zwei Schienenteile (50, 51) aufweist, die lösbar miteinander und/oder gegeneinander, vorzugsweise linear, verschiebbar ausgebildet sind, wobei insbesondere wenigstens ein Schienenteil (52) ein Langloch (54), vorzugsweise in linearer Verschiebungsrichtung, aufweist und/oder wobei insbesondere wenigstens ein Schienenteil (51) eine Kröpfung (63) aufweist.

11. Verwendung von Steigleitern (222, 232) bei der oder zur Errichtung eines Turms (11) einer Windenergieanlage, wobei der Turm (11) nach einem Verfahren gemäß einem der Ansprüche 1 bis 10 errichtet wird.

12. Verwendung von Stromschienen (42, 43) in einem Turm (11) einer Windenergieanlage (10), wobei der Turm (11) nach einem Verfahren gemäß einem der Ansprüche 1 bis 10 errichtet wird.

13. Turm (11) einer Windenergieanlage (10), wobei der Turm (11) aus mehreren Turmsegmenten (21 - 24) errichtet ist oder wird, wobei der Turm (11) gemäß dem Verfahren nach einem der Ansprüche 1 bis 10 errichtet ist.

## Claims

1. A method for erecting a tower (11) of a wind turbine (10) from at least three tubular tower segments (21-24, 101-105) of different designs A, B, C, wherein a tower segment (21 - 24, 101 - 105) is connected on each of its ends with another tower segment (21 - 24, 101 - 105), respectively,
- wherein the tower segments (21 - 24) are arranged above each other in a predetermined sequence of the type tower segment A - tower segment B - tower segment C,
- wherein the first tower segment A is selected arbitrarily from a provided plurality i ≥ 2 of first identically constructed and interchangeable tower segments Aᵢ,
- wherein the second tower segment B is selected arbitrarily from a provided plurality m ≥ 2 of second identically constructed and interchangeable tower segments Bₘ,
- wherein the third tower segment C is selected arbitrarily from a provided plurality n ≥ 2 of third identically constructed and interchangeable tower segments Cₙ,
wherein the tower segments Aᵢ, Bₘ, Cₙ have preinstalled components (51, 52, 71 - 75, 81 - 82, 222, 232) on the inside, which are interconnected using component length adapters (30, 50), wherein the tower segments Aᵢ, Bₘ, Cₙ have preinstalled current conduction means (51, 52, 71 - 75, 81 - 85) on the inside, wherein the current conduction means (51, 52, 71 - 75, 81 - 85) of the tower segments (21 - 24, 101 - 105) are interconnected using current conduction length equalization means (50) during the erection of the tower (11).

2. The method according to claim 1, **characterized in that** the tower segments have preinstalled ladders (222, 232) on the inside, wherein the ladders (222, 232) of the tower segments (21 - 24, 101 - 105) are interconnected using ladder length equalization means (30) during the erection of the tower (11).

3. The method according to claim 1 or 2, **characterized in that** the tower (11) is or will be erected from several tower segments (22, 23), wherein two tower segments (22, 23) are or will be interconnected in a common connection area, wherein a first tower segment (23) and a second tower segment (22) have respectively on the inside a ladder (232, 222), which respectively has at least one ladder beam (223, 224; 233, 234), wherein during the connection of the first tower segment (23) with the second tower segment (22), the ladder beam(s) (233, 234) in the first tower segment (23) in the connection area are spaced from the ladder beam(s) (223, 224) in the second tower segment (22), wherein, preferably during the erection of the tower (11) or upon or during the installation of the tower segments (22, 23), in the connection area using a ladder spacer (30) bridging the connection area of the tower segments (22, 23), the ladder beam(s) (233, 234) of the first tower segment (23) are or will be interconnected with the ladder beam(s) (223, 224) of the second tower segment (22).

4. The method according to claim 3, **characterized in that** the ladder spacer (30) is or will be arranged between the ladders (222, 232) of the tower segments (22, 23) without being fastened to the tower segments (22, 23) or the connection area of the tower segments (22, 23) and/or **in that** load forces acting on the ladder spacer (30) are or will be diverted to the lower ladder (232) and/or to the upper ladder (222).

5. The method according to claim 3 or 4, **characterized in that** length tolerances of up to 200 mm, in particular up to 100 mm, further preferably up to 40 mm, and/or lateral tolerances of up to 200 mm, in particular up to 100 mm, further preferably up to 50 mm, are equalized by means of the ladder spacer (30) in the state arranged between the ladders (222, 232).

6. The method according to one of the claims 3 to 5, **characterized in that** a length tolerance equalization takes place in the case of a ladder spacer (30) arranged between the ladders (222, 232) between the lower step tread of the ladder spacer (20) and the upper step tread of the lower ladder (232) and/or between the upper step tread of the ladder spacer (20) and the lower step tread of the upper ladder (232).

7. The method according to one of claims 3 to 6, **characterized in that** the ladders (232) of the first tower segment (23) and/or the ladder (222) of the second tower segment (22) have an arrester rail (236, 226), which mainly have the same length as the ladder (222, 232), wherein in particular an arrester rail (34) of the ladder spacer (30) is or will be adjusted in particular between the ends of the ladder rails (236, 226) of the first and of the second tower segment (23, 22) to be connected.

8. The method according to one of claims 3 to 7, **characterized in that** the length of the ladder (232) of the first tower segment (23) is smaller than the length of the first tower segment (23) so that the ends of the ladder (232) are respectively arranged at a predetermined distance from the ends of the tower segment (23) within the tower segment (23), wherein in particular the length of the ladder (222) of the second tower segment (22) is smaller than the length of the second tower segment (22), so that the ends of the ladders (222) are respectively arranged with a predetermined section to the ends of the tower segment (22) within the tower segment (22).

9. The method according to one of claims 1 to 8, **characterized in that** the tower (11) is or will be erected from several tower segments (22, 23), wherein two tower segments (22, 23) are or will be interconnected in a common connection area, wherein a first tower segment (23) and a second tower segment (23) each have a rigid conductor rail (43, 42) on the inside, wherein during the connection of the first tower segment (23) with the second tower segment (22) in the connection area the conductor rail (43) in the first tower segment (23) is spaced from the conductor rail (42) in the second tower segment (22), wherein using a rail adapter (50) bridging the connection area of the tower segments (22, 23) and variably adaptable in length, in particular variably adjustable in length, the conductor rail (43) of the first tower segment (23) is or will be interconnected with the conductor rail (42) of the second tower segment (22).

10. The method according to claim 9, **characterized in that** the conductor rail adapter (50) has at least two rail parts (50, 51), which are designed displaceably and releasably with respect to each other and/or against each other, preferably linearly, wherein in particular at least one rail part (52) has an elongated hole (54), preferably in a linear displacement direction, and/or wherein in particular at least one rail part (51) has an offset (63).

11. A use of ladders (222, 232) in the case of or for the erection of a tower (11) of a wind turbine, wherein the tower (11) is erected according to a method according to one of claims 1 to 10.

12. The use of conductor rails (42, 43) in a tower (11) of a wind turbine (10), wherein the tower (11) is erected according to a method according to one of claims 1 to 10.

13. A tower (11) of a wind turbine (10), wherein the tower (11) is or will be erected from several tower segments (21 - 24), wherein the tower (11) is erected according to the method according to one of claims 1 to 10.

## Revendications

1. Procédé pour ériger une tour (11) d'une éolienne (10) au moyen d'au moins trois segments de tour tubulaires (21 - 24, 101 - 105) de différents types A, B, C, dans lequel un segment de tour (21 - 24, 101 - 105) est relié par chacune de ses extrémités à un autre segment de tour (21 - 24, 101 - 105),
- dans lequel les segments de tour (21 - 24) sont agencés selon une séquence prédéterminée, de type segment de tour A - segment de tour B - segment de tour C l'un au-dessus de l'autre,
- dans lequel le premier segment de tour A est choisi arbitrairement parmi une pluralité disponible i ≥ 2 de premiers segments de tour Aᵢ qui sont mutuellement identiques et interchangeables,
- dans lequel le deuxième segment de tour B est choisi arbitrairement parmi une pluralité disponible m ≥ 2 de deuxièmes segments de tour Bₘ qui sont mutuellement identiques et interchangeables,
- dans lequel le troisième segment de tour C est choisi arbitrairement parmi une pluralité disponible n ≥ 2 de troisièmes segments de tour Cₙ qui sont mutuellement identiques et interchangeables,
les segments de tour Aᵢ, Bₘ, Cₙ comprennent des ensembles d'assemblage intérieurs pré-montés sous la forme de composants linéaires (51, 52, 71 - 75, 81 - 82, 222, 232) qui sont reliés les uns aux autres en utilisant des adaptateurs de longueur (30, 50), les segments de tour Aᵢ, Bₘ, Cₙ comprenant à l'intérieur d'eux des moyens de conduction de courant pré-montés (51, 52, 71 - 75, 81 - 85) comprennent, les moyens de conduction de courant (51, 52, 71 - 75, 81 - 85) des segments de tour (21 - 24, 101 - 105) sont, lors de l'érection de la tour (11), reliés les uns aux autres à l'aide de moyens (50) de compensation de longueur de câble de courant.

2. Procédé selon la revendication 1, **caractérisé en ce que** les segments de tour Aᵢ, Bₘ, Cₙ comprennent des échelles préassemblés (222, 232) à l'intérieur d'eux, les échelles (222, 232) des segments de tour (21 - 24, 101 - 105) étant, pendant la construction de la tour (11), reliées entre elles en utilisant des moyens (30) de compensation de longueur d'échelle.

3. Procédé selon la revendication 1 ou la revendication 2, **caractérisé en ce que** la tour (11) est érigée ou apte à être érigée à partir d'une pluralité de segments de tour (22, 23), deux segments de tour (22, 23) étant reliés ou aptes à être reliés l'un à l'autre par une zone de liaison commune, un premier segment de tour (23) et un deuxième segment de tour (22) ayant chacun une échelle respective (232, 222) à l'intérieur d'eux, dont chacune présente au moins un montant d'échelle (223, 224; 233, 234), le ou les montants d'échelle (233, 234) du premier segment de tour (23), lors de la liaison avec le deuxième segment de tour (22), étant espacés du ou des montants d'échelle (233, 234) du deuxième segment de tour (22) au niveau de la zone de liaison, de sorte que, de préférence lors de l'érection de la tour (11), ou au cours de l'assemblage des segments de tour (22,23) la zone de liaison des segments de tour (22, 23) soit pontée en utilisant une pièce intermédiaire d'échelle (30), le ou les montants d'échelle (233, 234) du premier segment de tour (23) étant reliés ou aptes à être reliés avec le ou les montants d'échelle (223, 224) du deuxième segment de tour (22).

4. Procédé selon la revendication 3, **caractérisé en ce que** la pièce intermédiaire d'échelle (30) est disposée ou apte à être disposée sans fixation aux segments de tour (22, 23) ou entre les échelles (222, 232) des segments de tour (22, 23) à la zone de liaison des segments de tour (22, 23), et / ou les forces de charge qui s'exercent sur la pièce intermédiaire d'échelle (30) sont dérivées ou aptes à être dérivées sur l'échelle inférieure (232) et / ou sur l'échelle supérieure (222).

5. Procédé selon la revendication 3 ou la revendication 4, **caractérisé en ce qu'**au moyen de la pièce intermédiaire d'échelle (30) placée entre les échelles (222, 232), sont compensées des tolérances de longueur allant jusqu'à 200 mm, en particulier allant jusqu'à 100 mm, plus préférablement allant jusqu'à 40 mm, et / ou sont compensées des tolérances latérales allant jusqu'à 200 mm, en particulier allant jusqu'à 100 mm, plus préférablement allant jusqu'à 50 mm.

6. Procédé selon l'une quelconque des revendications 3 à 5, **caractérisé en ce qu'**une compensation de tolérance de longueur est réalisée par la pièce intermédiaire d'échelle (30) placée entre les échelles (222, 232), entre le barreau inférieur de la pièce intermédiaire d'échelle (20) et le barreau supérieur de l'échelle inférieure (232) et / ou entre le barreau supérieur de la pièce intermédiaire d'échelle (20) et le barreau inférieur de l'échelle supérieure (232).

7. Procédé selon l'une quelconque des revendications 3 à 6, **caractérisé en ce que** l'échelle (232) du premier segment de tour (23) et / ou l'échelle (222) du deuxième segment de tour (22) possède un rail (236, 226) de protection contre les chutes sensiblement de la même longueur que les échelles (222, 232), un rail (34) de protection contre les chutes de la pièce intermédiaire d'échelle (30) étant en particulier ajusté ou étant apte à être ajusté entre les extrémités à assembler des rails (236, 226) de protection contre les chutes que comprennent le premier et le deuxième segment de tour (23, 22).

8. Procédé selon l'une quelconque des revendications 3 à 7, **caractérisé en ce que** la longueur de l'échelle (232) du premier segment de tour (23) est plus petite que la longueur du premier segment de tour (23), de sorte que les extrémités de l'échelle (232) sont chacune situées à une distance prédéterminée des extrémités du segment de tour (23), vers l'intérieur du segment de tour (23), la longueur de l'échelle (222) du deuxième segment de tour (22) étant en particulier plus petite que la longueur du deuxième segment de tour (22), de sorte que les extrémités de l'échelle (222) sont chacune situées à une distance prédéterminée des extrémités du segment de tour (22), vers l'intérieur du segment de tour (22).

9. Procédé selon l'une quelconque des revendications 1 à 8, **caractérisé en ce que** la tour (11) érigée ou apte à être érigée à partir d'une pluralité de segments de tour (22, 23), deux segments de tour (22, 23) étant reliés ou aptes à être reliés l'un à l'autre au niveau d'une zone de liaison commune, un premier segment de tour (23) et un deuxième segment de tour (22) comprenant chacun, à l'intérieur d'eux, un rail conducteur rigide (43, 42), de sorte que, lors de l'assemblage du premier segment de tour (23) au deuxième segment de tour (22), dans la zone de liaison, le rail conducteur (43) du premier segment de tour (23) est espacé du rail conducteur (42) du second segment de tour (22), une pièce (50) de connexion de rails étant utilisée pour ponter la zone de liaison des segments de tour (22, 23) et étant réglable dans sa longueur de façon variable, étant en particulier apte à être réglée de façon variable en longueur, le rail conducteur (43) du premier segment de tour (23) étant relié ou apte à être relié au rail conducteur (42) du deuxième segment de tour (22).

10. Procédé selon la revendication 9, **caractérisé en ce que** la pièce (50) de connexion de rails conducteurs comprend au moins deux parties de rail (50, 51) aptes à coulisser de façon amovible l'une par rapport à l'autre et / ou l'une contre l'autre, de préférence de façon linéaire, au moins une partie de rail (52) comprenant en particulier un trou allongé (54), s'étendant de préférence dans la direction de déplacement linéaire et / ou en particulier au moins un élément de rail (51) présente un décrochement (63).

11. Utilisation d'échelles (222, 232) durant la construction d'une tour (11) d'une éolienne ou pour cette construction, dans laquelle la tour (11) est érigée par un procédé selon l'une quelconque des revendications 1 à 10.

12. Utilisation de rails de connexion (42,43) dans une tour (11) d'une éolienne (10), ladite tour (11) étant érigée par un procédé selon l'une quelconque des revendications 1 à 10.

13. Tour (11) d'une éolienne (10), ladite tour (11) étant érigée ou apte à être érigée à partir d'une pluralité de segments de tour (21 - 24), la tour (11) étant érigée par le procédé selon l'une quelconque des revendications 1 à 10.
